# EUROPÄISCHE PATENTANMELDUNG

(11) **EP 2 690 293 A1**
(43) Veröffentlichungstag der Anmeldung: **29.01.2014**
(21) Anmeldenummer: 12178217.1
(22) Anmeldetag: 27.07.2012
(51) Int. Cl.: F16B 37/06

(54) **Einpressmutter**

(71) Anmelder: Vision Electric GmbH, 66851 Schwanenmühle (DE)
(72) Erfinder: Reiser, Dr. Wolfgang, 67697 Otterberg (DE); Huwer, Stefan, 67715 Geiselberg (DE)
(74) Vertreter: Gille Hrabal

(57) **Zusammenfassung**

Es wird vorgeschlagen, eine konventionelle Einpressmutter mit einer in axialer Richtung durch diese verlaufenden Gewindebohrung, einem Kopf und einem an einer Stirnseite des Kopfes angeordneten Kragen zum Einpressen in ein Loch in einem Werkstück, wobei die dem Kragen zugewandte Stirnseite des Kopfes in radialer Richtung nach außen über den Kragen übersteht und die Stirnseite eine Kontaktzone zum Anliegen an einem Werkstück aufweist, dadurch zu verbessern, dass deren Kontaktzone in radialer Richtung nicht unmittelbar an den Kragen angrenzt. Dadurch, dass der Kragen nicht unmittelbar an die am Werkstück anliegende Kontaktzone übergeht, entsteht am Werkstück im Bereich des Lochrandes eine Zone, in der keinerlei Kräfte in das Werkstück eingeleitet werden. Vielmehr können die Kräfte in einem günstigeren, lochfernen Bereich in das Material eingeleitet werden.

## Beschreibung

Die Erfindung betrifft eine Einpressmutter sowie eine Stromschiene mit einer solchen.

Einpressmuttern oder Setzmuttern besitzen einen meist gezahnten Kragen, der in ein Loch eines Werkstückes, meist Bleches, eingepresst wird. Die Schraube wird dann von der Rückseite aus eingeschraubt. Die im Blech eingegrabene Zahnung des Kragens nimmt das Anzugsdrehmoment auf, während der über den Kragen abstehende Kopf der Einpressmutter mit seiner Stirnfläche auf dem Blechrand des Loches aufliegt und die axialen Kräfte der Schraube abfängt.

DE 31 02 939 offenbart eine Einpressmutter mit einer in axialer Richtung durch diese verlaufender Gewindebohrung, einem Kopf und einem an einer Seite des Kopfes angeordneten gezahnten Kragen zum Einpressen in ein Loch in einem Blech, wobei eine dem Kragen zugewandte Stirnseite des Kopfes in radialer Richtung nach außen über den Kragen übersteht und die gesamte Stirnseite die Kontaktzone zum Anliegen an dem Blech bildet. Zwischen der Kontaktzone und dem Kragen ist eine umlaufende Ringnut vorgesehen, welche direkt an den Kragen angrenzt und sich in radialer Richtung nach innen erstreckt. Die Ringnut ermöglicht das Einfließen von Blechmaterial beim Anziehen der Schraubverbindung durch das Eingraben von Zähnen in der Stirnseite. Dadurch ist die Einpressmutter im Blech formschlüssig gegen Verlieren gesichert.

DE 37 08 856 zeigt eine ähnliche Einpressmutter, bei der zwischen Kragen und Kontaktzone eine radial nach innen gerichtete Ringnut vorgesehen ist, welche die den hinteren Abschluss eines Zahnes bildet. Zahne und Rille bilden zusammen eine Art Widerhaken gegen das Herausfallen der Einpressmutter aus dem Blech.

Stromschienen, insbesondere Gleich- oder Wechselstromschienen zur Übertragung hoher Ströme, werden häufig durch Schraubverbindung miteinander verbunden, um eine besonders hohe und definierte Stromtragfähigkeit zu erhalten, Übliche Schraubverbindungen zum Verbinden zweier Stromschienen bestehen konventionell aus einer Schraube, einer Mutter und ein- oder beidseitig vorgesehenen Tellerfedern (Spannscheiben) zum Ausgleich von Setzungen und Ausdehnungen (z. B. thermische) der miteinander verbundenen Stromschienen, was auch als "Atmen" der Verbindung bezeichnet wird. Bei größeren Stromschienensystemen, bei denen auf engem Raum eine Vielzahl von Verbindungen hergestellt werden müssen, ist das notwendige Gegenhalten mühsam. Ferner wird für die Mutter, welche naturgemäß auf der Oberfläche der Stromschiene auffliegt, Bauraum beansprucht. Ferner erfolgte die Krafteinleitung mittels Tellerfedern ausschließlich auf dem unteren Tellerrand, also sehr punktuell, was zu unerwünschten Fließvorgängen führt, insbesondere in den üblicherweise weicheren Materialien Aluminium und Kupfer, welche für Stromschienen typisch sind. Der Einsatz von zusätzlichen Unterlegscheiben ist aus Handhabbarkeitsgründen problematisch, erhöht den Bauraum und erfordert weitere Schritte bei der Montage.

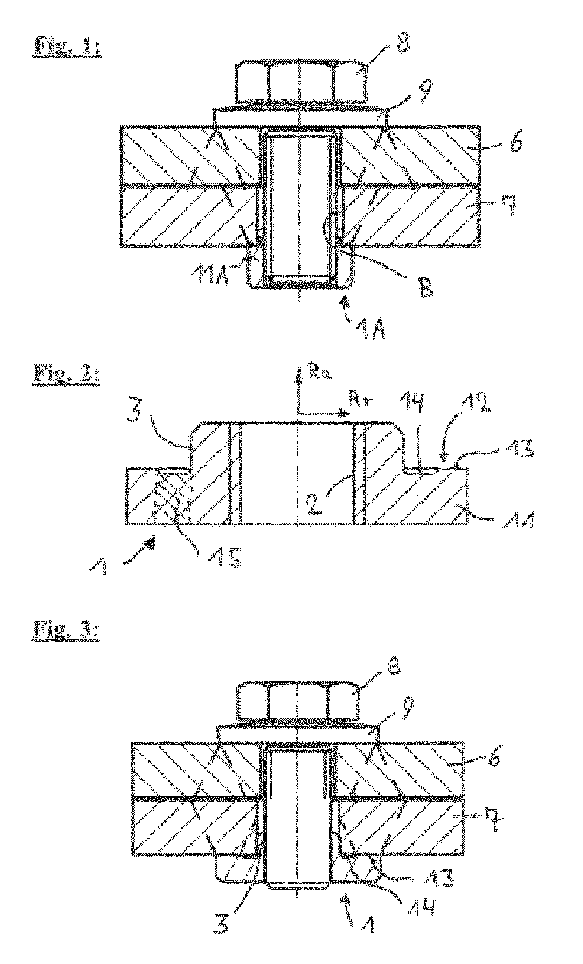

Daher wurden Versuche unternommen, anstelle der Mutter eine Einpressmutter in eine entsprechende Öffnung einer Stromschiene einzusetzen, wodurch ein Teil des Gewindes in der Stromschiene verläuft, Jedoch zeigte sich, dass die aus dem Stand der Technik bekannten Einpressmuttern eine ungünstige Krafteinleitung mit besonders hohen Kräften am besonders empfindlichen Lochrand mit sich bringen, wie in Fig. 1 dargestellt.

Es ist Aufgabe der Erfindung, eine gegenüber dem Stand der Technik weiter entwickelte Einpressmutter zu schaffen.

Diese Aufgabe wird gelöst durch eine Einpressmutter mit den Merkmalen des Hauptanspruchs. Vorteilhafte Ausgestaltungen sind Gegenstand der Unteransprüche. Einer Stromschiene mit einer solchen Einpressmutter ist Gegenstand des nebengeordneten Anspruchs.

Es wird vorgeschlagen, eine konventionelle Einpressmutter mit einer in axialer Richtung durch diese verlaufenden Gewindebohrung, einem Kopf und einem an einer Stirnseite des Kopfes angeordneten Kragen zum Einpressen in ein Loch in einem Werkstück, wobei die dem Kragen zugewandte Stirnseite des Kopfes in radialer Richtung nach außen über den Kragen übersteht und die Stirnseite eine Kontaktzone zum Anliegen an einem Werkstück aufweist, dadurch zu verbessern, dass deren Kontaktzone in radialer Richtung nicht unmittelbar an den Kragen angrenzt.

Dadurch, dass der Kragen nicht unmittelbar an die am Werkstück anliegende Kontaktzone übergeht, entsteht am Werkstück im Bereich des Lochrandes eine Zone, in der keinerlei Kräfte in das Werkstück eingeleitet werden. Vielmehr können die Kräfte in einem günstigeren, lochfernen Bereich in das Material eingeleitet werden. Der empfindliche Lochrand wird nur noch sehr gering belastet. Darüber hinaus ermöglicht dieser Freiraum zwischen Kragen und Kontaktzone eine Auslegung der Einpressmutter als Spannscheibe, wie weiter unten genauer erläutert. Durch konstruktiv sehr einfache Maßnahmen, die keine besonderen zulässigen Fertigungsschritte erfordern, kann daher eine erfindungsgemäß modifizierte Einpressmutter gleichzeitig die Funktion einer Unterlegscheibe und einer Spannscheibe übernehmen. Spannscheiben sind mitverspannte Federelemente z. B. in Form einer Tellerfeder, deren Sicherungswirkung ausschließlich auf Kraftschluss beruht. Sie sollen einem Lockern der Schraubverbindungen, wie durch Setzungen, entgegenwirken, indem sie durch Federkräfte eine hinreichend hohe Vorspannung in der Verbindung aufrechterhalten.

Unter Kragen wird derjenige Teil der Einpressmutter verstanden, welcher in das Loch des Werkstücks, zum Beispiel einem Blech oder einer Stromschiene, eingesetzt werden soll. Der Kragen weist üblicherweise eine strukturierte Oberfläche auf, welche sich in der Oberfläche des Loches eingraben kann, um das Anzugsdrehmoment aufzunehmen und ein unbeabsichtigtes Herausfallen der Einpressmutter zu verhindern. Dazu kann der Kragen beispielsweise gezahnt oder gerändelt sein. Durch eine Rändelung baut sich auf der Oberfläche des Kragens Material auf, welches beim Einsetzen in das Loch weggedrückt werden kann.

Der über den Kragen abstehende Kopf der Einpressmutter ist dazu gedacht, sich mit der Kontaktzone seiner Stirnfläche auf dem Blechrand des Loches abzustützen um dabei die axialen Kräfte der Schraubverbindung abzufangen. Dabei kann die Kontaktzone als plane Fläche ausgebildet seien, aber auch eine strukturierte Oberfläche, zum Beispiel mit Zähnen, aufweisen, um besseren Kontakt mit dem Untergrund zu haben. Somit kann ein höheres Anzugsdrehmoment aufgenommen werden.

Vorzugsweise ist in der Stirnseite zwischen Kontaktzone und Kragen eine Vertiefung vorgesehen, welche direkt an den Kragen angrenzt und sich in axialer Richtung vertieft und deren Breite sich in radialer Richtung weg vom Kragen erstreckt. Die Breite der Vertiefung bestimmt den radial nach außen hin verlagerten Ort der Krafteinleitung in das Material, während deren die Tiefe und Breite gemeinsam bestimmen, wie steif bzw. federnd die Kontaktzone mit der Gewindebohrung verbunden ist. Wenn die Vertiefung direkt an den Kragen angrenzt, ist gewährleistet, dass keine Teile der Einpressmutter am Lochrand anliegen, und somit deren Beweglichkeit behindern können

Vorzugsweise verläuft die Vertiefung umlaufend um den Kragen und kann daher als einfache Ringnut spanend oder umformend erzeugt werden.

Wie bereits oben angedeutet, kann die Vertiefung derart ausgelegt sein, dass die Einpressmutter nach Art einer Spannscheibe wirken kann. Die Vertiefung soll also verhindern, dass die der Einpressmutter innewohnende Federeigenschaft behindert wird: Wenn der Kragen in ein Werkstück eingepresst ist und die Kontaktzone an dem Werkstück anliegt soll also ein Federn der Gewindebohrung relativ zum Werkstück und/oder der Kontaktzone möglich sein. Somit übernimmt die Einpressmutter die Funktion einer Spannscheibe.

Wenngleich mit den oben genannten Angaben der Fachmann problemlos in die Lage versetzt ist, zu jeder Gewindegröße eine passende Auslegung der folgenden Komponenten zu finden, haben sich in Versuchen die folgenden Bereiche bewertet: bezogen auf eine bestimmte Gewindegröße der Einpressmutter (z. B. M12 = 12mm) kann die Breite der Vertiefung, welche den Abstand der Krafteinleitung vom Lochrand bestimmt, 15-60 % der Gewindegröße betragen. Die Tiefe der Vertiefung, welche insbesondere die Federeigenschaften bestimmt, kann 1,5 - 20 % der Gewindegröße betragen. Die Breite der Kontaktzone , welche die gleichmäßige Krafteinleitung in das Werkstück bestimmt, kann 15-60 % der Gewindegröße betragen Der Durchmesser des Kopfes, welcher sich im wesentlichen bereits aus den oben genannten Parametern zwangsläufig ergibt, kann 150-300 % der Gewindegröße betragen.

Vorzugsweise weist der Kragen eine Oberflächenstruktur, z. B. Rändelung oder Zahnung auf. Diese erfüllt mehrere Funktionen:
die in das Loch eingesetzte Einpressmutter soll derart sicher im Loch halten, dass sie im unverschraubten Zustand nicht herausfallen kann, zum Beispiel bei Transport und Lagerung, auch nicht bei Erschütterungen;
gleichzeitig soll sie auch bei gezieltem leichten Druck, wie er beim Einführen der Schraube auftritt, nicht herausfallen;
sie soll derart verdrehsicher sein, dass sie sich beim Anziehen der Schraube nicht dreht (Reibkraft zwischen Kragen und Loch größer als zwischen Gewindebohrung und Schraube) zumindest solange bis die Kontaktzone am Werkstück anliegt und wegen des längeren Hebelarms die Aufgabe übernimmt;
sie soll derart beweglich sein, dass eine federnde Bewegung zwischen Kragen und Loch in axialer Richtung zum Ausgleich von Setz- und Dehnungserscheinungen im verschraubten Zustand unter Last möglich ist.

Der Fachmann wird die geeignete Passung unter den oben genannten Bedingungen auffinden. Dabei kann er auch berücksichtigen, dass eine losere Passung das Einsetzen der Einpressmutter erleichtert. Vorzugsweise wird der Fachmann eine festere Übergangspassung oder leichtere Presspassung zwischen Loch und Kragen auswählen, so dass die oben genannten Funktionen erfüllt werden können.

Schließlich ist eine Stromschiene, insbesondere ein Gleich- oder Wechselstromschiene zur Übertragung hoher Ströme, insbesondere belastbar mit mindestens 300 A, beansprucht, mit einem Loch und einer darin befestigten Einpressmutter nach einem der vorherigen Ansprüche. Wenngleich die erfindungsgemäße Einpressmutter auf zahlreichen technischen Gebieten einsetzbar ist, so ist deren besondere Stärke im Bereich der vergleichsweise weichen Materialien, wie zum Beispiel das im Stromschienenbau weitverbreitete Aluminium und Kupfer offensichtlich.

Weitere Vorteile ergeben sich aus der folgenden Beschreibung und den beigefügten Figuren. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter.

Fig. 1 zeigt zwei Bleche 6,7, die durch eine durch eine gemeinsame Durchgangsbohrung B verlaufende Verschraubung miteinander verbunden sind. Im unteren Blech 7 ist eine aus dem Stand der Technik bekannte Einpressmutter 1A, die die Zugkräfte einer Schraubverbindung, gebildet durch eine in das obere Blech 6 eingesetzte Schraube mit Tellerfeder 9. Der Kopf 11A der Einpressmutter 1A leitet die Kräfte unmittelbar in den Lochrand der Durchgangsbohrung B, so dass sich die gestrichelt dargestellte Krafteinleitung in die Bleche 6,7 ergibt. Der Verlauf ist nicht optimal, da insbesondere die Einpressmutter mit ihrem vergleichsweise schmalen Kopf die größten Kräfte im Bereich des Lochrandes einbringt.

Fig. 2 zeigt die erfindungsgemäß verbesserte Einpressmutter in einem Ausführungsbeispiel. Durch die Einpressmutter 1 verläuft in axialer Richtung Ra eine Gewindebohrung 2 zur Aufnahme einer Schraube. Der breitere Teil der Einpressmutter 1 bildet einem Kopf 1 1 , an dessen oberer Stirnseite 12 der Kragen 3 zum Einpressen in ein LochB eines nicht dargestellten Bleches 7 vorgesehen ist. Die Oberfläche des Kragens 3 ist strukturiert, beispielsweise gezahnt oder gerändelt. Die dem Kragen 3 zugewandte Stirnseite 12 des Kopfes steht in radialer Richtung nach außen über den Kragen und verhindert daher ein zu tiefes Einsetzen des Kragen in ein Blech.

Die Stirnseite 12 verfügt über eine Kontaktzone 13 zum Anliegen an dem Werkstück, also zum Einleiten der Schraubkraft in das Blech. Dabei grenzt die Kontaktzone 13 in radialer Richtung Rr nicht unmittelbar an den Kragen 3 an. Dazu ist eine ringnutartig um den Kragen verlaufende und an diesen angrenzende Vertiefung 14 vorgesehen. Die Vertiefung 14 in ihrer Breite und Tiefe entscheidet darüber, wie steif die Kontaktzone 13 mit der Gewindebohrung 2 verbunden ist. Lediglich zum besseren Verständnis ist derjenige Bereich 15, welcher im Wesentlichen federt, zusätzlich schraffiert. Der Bereich 15 besteht jedoch nicht aus einem anderen Material als die Einpressmutter.

Fig. 3 zeigt die zwei Bleche 6,7 aus Fig. 1. der Unterschied besteht lediglich darin, dass die erfindungsgemäße Einpressmutter 1 anstelle der aus dem Stand der Technik bekannten Einpressmutter verbaut ist. Die erfindungsgemäße Einpressmutter verteilt dank ihrer breiteren und radial beanstandeten Kontaktzone 12 die Schraubenkräfte gleichmäßiger und in sicherer Entfernung vom Lochrand der Durchgangsbohrung B. Kraftspitzen im Lochrand werden verhindert. Ferner kann wegen der Vertiefung 14 der Kragen 3 mit seiner Gewindebohrung 2 in axialer Richtung federn.

## Patentansprüche

1. Einpressmutter (1) mit einer in axialer Richtung (Ra)durch diese verlaufenden Gewindebohrung (2), einem Kopf (11) und einem an einer Stirnseite (12) des Kopfes angeordneten Kragen (3) zum Einpressen in ein Loch (B) in einem Werkstück (6,7),
wobei die dem Kragen (3) zugewandte Stirnseite (12) des Kopfes in radialer Richtung nach außen über den Kragen übersteht und die Stirnseite (12) eine Kontaktzone (13) zum Anliegen an einem Werkstück aufweist,
**dadurch gekennzeichnet, dass**
die Kontaktzone (13) in radialer Richtung (Rr) nicht unmittelbar an den Kragen (3) angrenzt.

2. Einpressmutter nach Anspruch 1 , **dadurch gekennzeichnet, dass** in der Stirnseite zwischen Kontaktzone und Kragen eine Vertiefung (14) vorgesehen ist, welche direkt an den Kragen angrenzt und sich in axialer Richtung vertieft und deren Breite sich in radialer Richtung weg vom Kragen erstreckt.

3. Einpressmutter nach einem der vorherigen Ansprüche, **dadurch gekennzeichnet, dass** die Vertiefung umlaufend um den Kragen verläuft.

4. Einpressmutter nach einem der vorherigen Ansprüche, **dadurch gekennzeichnet, dass** die Vertiefung derart ausgelegt ist, dass die Einpressmutter nach Art einer Spannscheibe wirken kann,
insbesondere derart, dass wenn der Kragen in ein Werkstück eingepresst ist und die Kontaktzone an dem Werkstück anliegt, ein Federn der Gewindebohrung relativ zum Werkstück und/oder der Kontaktzone möglich ist.

5. Einpressmutter nach einem der vorherigen Ansprüche, **dadurch gekennzeichnet, dass** die Einpressmutter eine Gewindegröße aufweist und die Breite der Vertiefung 15-60 % und/oder die Tiefe der Vertiefung 1,5 - 20% die Breite der Kontaktzone 15-60 % und/oder der Durchmesser des Kopfes 150-300 % der Gewindegröße betragen.

6. Einpressmutter nach einem der vorherigen Ansprüche, **dadurch gekennzeichnet, dass** der Kragen eine Oberflächenstruktur, z. B. Rändelung oder Zahnung aufweist.

7. Stromschiene, insbesondere Gleich- oder Wechselstromschiene zur Übertragung hoher Ströme, insbesondere belastbar mit mindestens 300 A, mit einem Loch und darin befestigter Einpressmutter nach einem der vorherigen Ansprüche.

8. Stromschiene nach einem der vorherigen Ansprüche, **dadurch gekennzeichnet, dass** Loch und Kragen derart ausgelegt sind, dass zwischen diesen eine Übergangspassung besteht.
